# EUROPÄISCHE PATENTSCHRIFT

(11) **EP 1 320 419 B1**
(45) Veröffentlichungstag und Bekanntmachung des Hinweises auf die Patenterteilung: **12.01.2005**
(21) Anmeldenummer: 01965162.9
(22) Anmeldetag: 02.08.2001
(51) Int. Cl.: B05C 5/02, B25J 9/16, B25J 19/02

(54) **ANORDNUNG ZUM AUFBRINGEN VON KLEBSTOFF AUF EIN WERKSTÜCK**
DEVICE FOR APPLYING ADHESIVE TO A WORKPIECE
DISPOSITIF POUR APPLIQUER DE LA COLLE SUR UNE PIECE

(30) Priorität: 29.09.2000 DE 10048749
(43) Veröffentlichungstag der Anmeldung: 25.06.2003
(60) Teilanmeldung: 04011323.5
(73) Patentinhaber: Schucker, Josef, 76227 Karlsruhe (DE)
(72) Erfinder: Schucker, Josef, 76227 Karlsruhe (DE)
(74) Vertreter: Wolf, Eckhard, Dr.-Ing.
(86) Internationale Anmeldenummer: PCT/EP2001/008965
(87) Internationale Veröffentlichungsnummer: WO 2002/026397

(56) Entgegenhaltungen:
- FR-A- 2 695 452
- US-A- 4 724 302
- US-A- 4 916 286
- US-A- 4 998 502
- US-A- 5 110 615
- US-A- 5 532 452
- US-A- 5 533 146
- US-A- 5 932 062
- PATENT ABSTRACTS OF JAPAN vol. 015, no. 043 (C-0801), 31. Januar 1991 (1991-01-31) -& JP 02 277573 A (SANYO ELECTRIC CO LTD), 14. November 1990 (1990-11-14)

## Beschreibung

Die Erfindung betrifft eine Anordnung zum Aufbringen von Klebstoff auf ein Werkstück mit einem mit dem viskosen Klebstoff unter Druck beaufschlagbaren, eine Auftragsdüse aufweisenden Düsenkopf, wobei der Düsenkopf und das Werkstück mittels einer Roboteranordnung so relativ zueinander bewegbar sind, daß der vorzugsweise in einem Sprühstrahl aus der Auftragsdüse austretende Klebstoff in Form eines Klebstoffstreifens entlang einer vorgegebenen Auftragsbahn auf das Werkstück applizierbar ist und wobei sich am Düsenkopf oder am zugehörigen Roboterglied eine auf den Sprühstrahl oder den Klebstoffstreifen gerichtete, ausgangsseitig an eine Bildauswerteeinheit zur Erzeugung von Bilddaten des Klebstoffstreifens angeschlossene Kameraanordnung befindet. Im folgenden sollen unter dem Begriff "Klebstoff" auch andere viskose Stoffe, wie Dichtstoffe, verstanden werden, die über eine Auftragsdüse in viskoser Form auf ein Werkstück aufgetragen werden.

Beim Auftrag von Klebstoffen ist es bekannt, den viskosen Klebstoff ohne oder mit Luftunterstützung in Form eines Klebstoffstrangs entlang der Auftragsbahn auf das Werkstück aufzutragen. Weiter ist es bekannt, einen aus einer Auftragsdüse austretenden Klebstofffaden nach dem Wirbelstromprinzip mit Hilfe von Druckgas auszulenken und zu verwirbeln und auf diese Weise einen schleifenartig gelegten, partiell offenen Massestreifen definierter Breite auf das Werkstück aufzutragen (EP 0576498 B1). Mit den dortigen Maßnahmen wurde auch der Erkenntnis Rechnung getragen, daß je nach Viskosität oder Steifheit des Klebstoffs ein mehr oder weniger zäher Klebstofffaden mit gleichbleibendem Mengenstrom aus der Auftragsdüse des Düsenkopfs austritt und daß man andererseits je nach Zähigkeit dieses Fadens einen mehr oder weniger großen Gasstrom benötigt, um den Faden definiert auszulenken und zu einer definierten Streifenbreite zu gelangen. Dazu wird ein von der Viskosität abhängiger Parameter der pastösen Masse gemessen und die in der Zeiteinheit zugeführte Druckgasmenge in funktioneller Abhängigkeit von dem gemessenen Viskositätsparameter so gesteuert, daß ein Massestreifen von gleichbleibender Breite entlang dem Werkstück aufgesprüht wird. Als viskositätsabhängige Parameter kommen in Betracht der Förderdruck der pastösen Masse, die Temperatur der pastösen Masse und der Antriebsdruck bzw. die Antriebsleistung einer Dosiervorrichtung für die pastöse Masse. Bei der viskositätsabhängigen Druckgaszufuhr handelt es sich um eine steuerungstechnische Maßnahme, die einen erheblichen Kalibrieraufwand erfordert. Vor allem bei einer Änderung von Applikationsparametem, bei Änderung des Roboterprogramms oder bei einer Änderung des Klebers oder der Bauteiloberfläche sind Nachkalibrierungen erforderlich, die recht zeitaufwendig sein können.

Zur Vermeidung dieses Nachteils ist es bei einer Einrichtung zum Aufbringen von Klebstoff auf ein Werkstück an sich bekannt (US-A-4,724,302), einen auf den Klebstoffstreifen gerichteten ausgangsseitig an eine Auswerteeinheit angeschlossenen Lichtempfänger zu verwenden, mit welchem eine automatische Überwachung des Klebstoffauftrags durchgeführt werden kann. Vor allem bei einem komplizierten, nicht geradlinigen Verlauf des aufgetragenen Klebstoffstreifens ist mit einer solchen Anordnung eine lückenlose Bilddarstellung nicht möglich.

Ausgehend hiervon liegt der Erfindung die Aufgabe zugrunde, eine Einrichtung zum Aufbringen von Klebstoff auf ein Werkstück der eingangs angegebenen Art dahingehend zu verbessern, dass eine lückenlose Bilddarstellung des Sprühstrahls oder des Klebstoffstreifens entlang der Auftragsbahn ermöglicht wird.

Zur Lösung dieser Aufgabe wird die im Anspruch 1 angegebene Merkmalskombination vorgeschlagen. Vorteilhafte Ausgestaltungen und Weiterbildungen der Erfindung ergeben sich aus den abhängigen Ansprüchen.

Der erfindungsgemäßen Lösung liegt der Gedanke zugrunde, dass eine lückenlose Erfassung des Sprühstrahls oder des Klebstoffstreifens über die Auftragsbahn dadurch ermöglicht wird, dass die Kameraanordnung mehrere mit ihrem Objektiv auf den Sprühstrahl oder den Klebstoffstreifen gerichtete Kameraeinheiten umfasst, und dass die Bildauswerteeinheit eine Vergleichsschaltung oder -routine für einen Ist-/Sollwertvergleich zumindest eines Teils der Bilddaten entlang der Auftragsbahn aufweist, deren Differenzausgang Bestandteil eines Regelkreises zur Nachführung der Dosier- und Bahnparameter sein kann. Zu diesem Zweck ist der Düsenkopf über eine Dosiereinrichtung mit Klebstoff beaufschlagbar, während die Bildauswerteeinheit Bestandteil eines die Dosiereinrichtung ansteuernden Regelkreises ist.

Die Kameraeinheiten sind beispielsweise als Zeilenkameras ausgebildet, deren Bildaufnahmezeile quer oder schräg zur Auftragsbahn ausgerichtet ist. Bevorzugt werden jedoch als CCD-Kameras ausgebildete Kameraeinheiten, die in rascher Folge zweidimensionale, digital abspeicherbare und auswertbare Rasterbilder erzeugen. Grundsätzlich ist es es auch möglich, dass die Kameraeinheiten als Infrarotkameras ausgebildet sind.

Eine bevorzugte Ausgestaltung der Erfindung sieht vor, dass die Bildauswerteanordnung einen Istwertspeicher zur fortlaufenden Abspeicherung der gemessenen Bilddaten sowie eine mit dem Istwertspeicher synchronisierbaren Weg- oder Impulsgeber entlang der Auftragsbahn aufweist. Vorteilhafterweise weist die Bildauswerteeinheit einen an vorgegebenen Kalibrierstellen des Werkstücks selbstkalibrierenden Weggeber auf. Bei den Kalibrierstellen handelt es sich entweder um Strukturelemente des Werkstücks, wie Durchbrüche, Kanten oder Überlappungsstellen, oder um eigens für die Selbstkalibrierung auf dem Werkstück vorgesehene Kalibriermarken oder eine Kalibrierskala.

Gemäß einer weiteren bevorzugten Ausgestaltung der Erfindung weist die Bildauswerteeinheit einen Sollwertgeber oder -generator zur Generierung von vorgegebenen Bilddaten entlang der Auftragsbahn auf. Die Sollwert-Bilddaten können dabei beispielsweise an einem Master-Werkstück bei einem Lerndurchlauf (teach in) eingelesen werden.

Weiter kann es von Vorteil sein, wenn am Düsenkopf oder am zugehörigen Roboterglied ein auf das Werkstück gerichteter und über die Auftragsbahn scannender Abstandssensor zur Bestimmung des Düsenabstandes vom Werkstück oder des Dickenprofils des Klebstoffstreifens vorgesehen ist.

Vorteilhafterweise weist die Dosiereinrichtung einen Mengenregler zur Einstellung der Klebstoffmenge sowie eine Regel- oder Steuereinrichtung zur Einstellung der Streifenbreite des Klebstoffs entlang der Auftragsbahn auf. Der Mengenregler kann dabei eine Kolbenpumpe mit einem Kolbenwegmesser umfassen, deren Antriebsdruck oder Antriebskraft bei zumindest zeitweilig konstantem Düsenaustrittsquerschnitt variierbar ist. Eine bevorzugte Ausgestaltung der Erfindung sieht vor, daß der Düsenkopf als Wirbelsprühkopf ausgebildet ist, dessen Auftragsdüse zur Abgabe eines zusammenhängenden Klebstofffadens bestimmt ist und der mindestens eine schräg zum austretenden Klebstofffaden weisende Sprühluftdüse aufweist. Zusätzlich ist eine Steuereinrichtung zur Einstellung der Sprühluftzufuhr nach Maßgabe der vorgegebenen Streifenbreite entlang der Auftragsbahn vorgesehen, die mit einem von der Bildauswerteanordnung abgegebenen, aus einer Abweichung der gemessenen von der vorgegebenen Streifenbreite abgeleiteten Nachführsignal beaufschlagbar ist. Alternativ dazu kann der Düsenkopf als Wirbelsprühkopf ausgebildet sein, dessen Auftragsdüse zur Abgabe eines zusammenhängenden Klebstofffadens bestimmt ist und um eine Exzenterachse drehend antreibbar ist. Zusätzlich ist auch hier eine Steuerungseinrichtung zur Einstellung der Düsendrehzahl nach Maßgabe der vorgegebenen Streifenbreite entlang der Auftragsbahn vorgesehen ist, die mit einer von der Bildauswerteanordnung abgegebenen, aus einer Abweichung der gemessenen von der vorgegebenen Streifenbreite abgeleiteten Nachführsignal beaufschlagbar ist. Bei beiden Varianten kann die Steuereinrichtung zur Einstellung der Sprühluftzufuhr oder der Düsendrehzahl eingangsseitig mit Steuerparametern beaufschlagt wird, die aus der vorgegebenen oder gemessenen Klebstoffmenge pro Zeiteinheit und einer viskositätsabhängigen Größe abgeleitet sind. Die viskositätsabhängige Größe kann dabei proportional zum augenblicklichen Antriebsdruck einer als Kolbenpumpe ausgebildeten Dosiervorrichtung sein.

Eine weitere bevorzugte Ausgestaltung der Erfindung sieht vor, daß die Roboteranordnung einen Bahnkurvenspeicher oder -generator zur Vorgabe des Weges und der Geschwindigkeit des Düsenkopfs entlang der Auftragsbahn aufweist.

Vorteilhafterweise ist die Bildauswerteeinheit durch einen Steuercomputer und eine Bildauswertesoftware gebildet. Die Bildauswerteeinheit oder der Steuercomputer können dabei vorzugsweise über ein Online-Netz mit einem externen Computer vernetzt sein. Der externe Computer kann andererseits vorzugsweise über das Online-Netz mit der Steuereinrichtung vernetzt sein. Mit diesen Maßnahmen ist eine Online-Überwachung des Kleberoboters sowie eine Nachführung der Steuer- und Regelparameter von einer externen Überwachungsstelle aus beispielsweise über das Internet möglich. Die lückenlose Bilddarstellung ermöglicht außerdem eine rasche Fehlererkennung und - behebung.

Im folgenden wird die Erfindung anhand der in der Zeichnung dargestellten Ausführungsbeispiele näher erläutert. Es zeigen
- Fig. 1: einen Roboter für die Bördelnahtversiegelung eines Werkstücks in schaubildlicher Darstellung;
- Fig. 2 a: einen Schnitt durch einen am Endglied des Roboters angelenkten Düsenkopf;

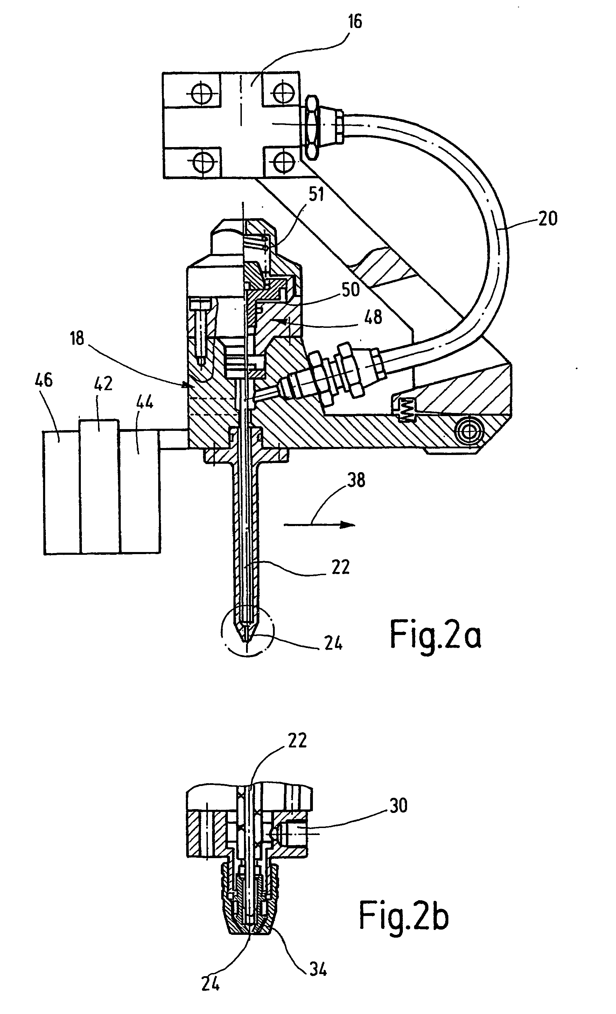

- Fig. 2 b: einen vergrößerten Ausschnitt aus Fig. 2 a im Bereich der Auftragsdüse;

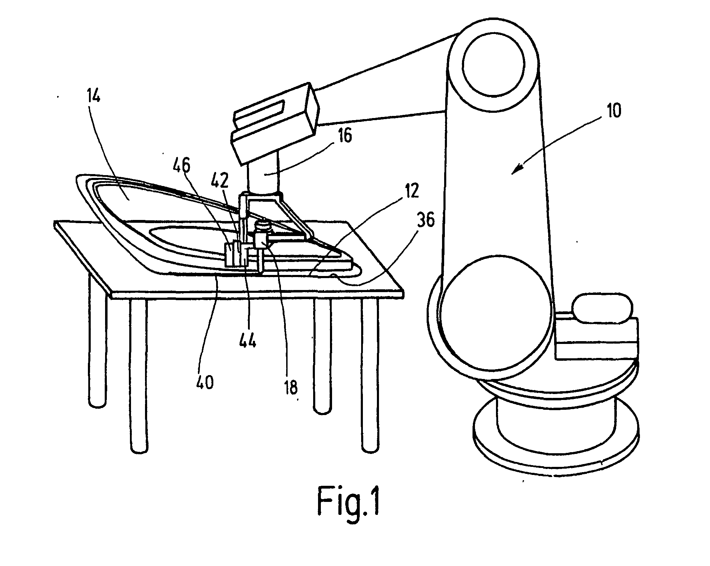

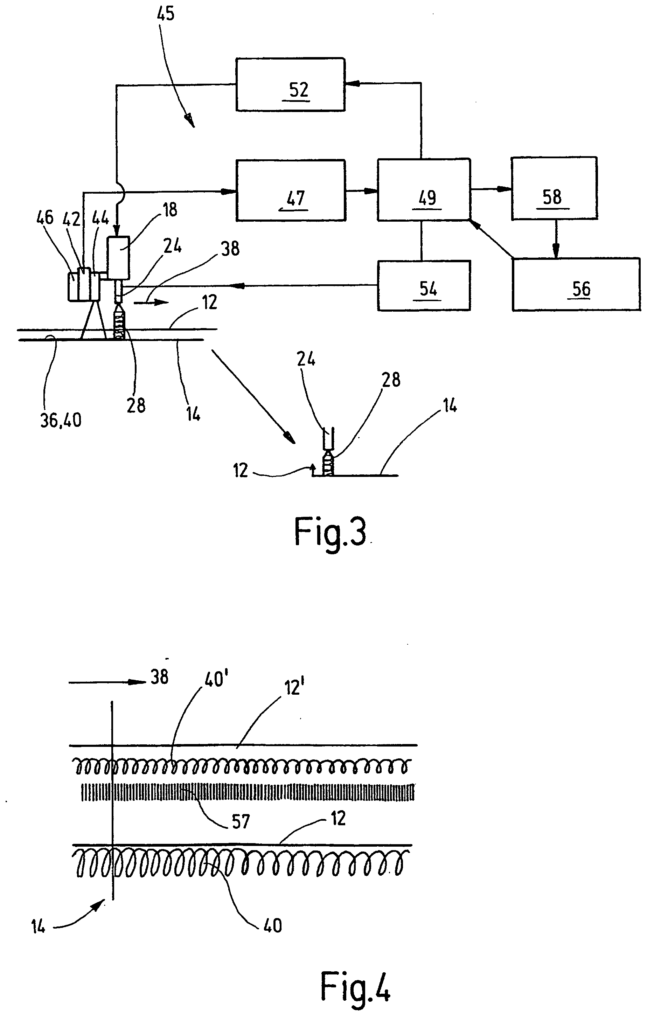

- Fig. 3: ein Schema einer Steuerungseinrichtung zur Ansteuerung des Düsenkopfes für die Roboteranordnung nach Fig. 1;
- Fig. 4: ein Schema zur Erläuterung des Soll-/Istwert-Vergleichs in der Steuerungseinrichtung nach Fig. 3.

Die in der Zeichnung dargestellte Roboteranordnung 10 ist für den Klebstoffauftrag zur Versiegelung von verklebten Bördelnähten 12 von KFZ-Teilen 14 bestimmt. Der Roboter trägt zu diesem Zweck an seinem Endglied 16 einen Düsenkopf 18, der über einen flexiblen Schlauch 20 mit einem pastösen Klebstoff beaufschlagbar ist und der eine mit einer Ventilnadel 22 verschließbare Auftragsdüse 24 aufweist. Die Betätigung der Ventilnadel 22 erfolgt über eine Zylinder-Kolbenanordnung 48, deren Kolben 50 in die Offenstellung über die Robotersteuerung entgegen der Kraft einer Schließfeder 51 pneumatisch nach oben und in die Schließstellung unter der Einwirkung der Schließfeder 51 nach unten verschoben wird. Der Düsenkopf 18 ist bei dem gezeigten Ausführungsbeispiel als Wirbelsprühkopf ausgebildet, aus dessen Auftragsdüse 24 ein Klebstofffaden 28 austritt, der mit Hilfe von Druckgas ausgelenkt und verwirbelt wird, so daß ein schleifenartig gelegter, partiell offener Klebstoffstreifen 40 definierter Breite auf das Werkstück 14 aufgetragen wird. Zu diesem Zweck weist der Düsenkopf 18 einen Sprühluftanschluß 30 auf, an den eine Sprühluftleitung angeschlossen ist. Die hierüber zugeführte Sprühluft mündet in einen schräg zur Auftragsdüse 24 weisenden Luftaustrittskanal 34.

Der Düsenkopf ist über die Roboteranordnung 10 relativ zum Werkstück 14 entlang einer vorgegebenen Auftragsbahn 36 in Richtung des Pfeils 38 bewegbar und bringt über die Auftragsdüse 24 einen verwirbelten Klebstoffstreifen 40 auf das Werkstück 14 auf.

Wie aus Fig. 1 und 3 zu ersehen ist, befindet sich am Endglied 16 des Roboters 10 zusätzlich eine Kameraanordnung 42 mit mehreren Kameraeinheiten und einer Beleuchtungseinrichtung 44, die die Aufgabe hat, die Ausbringung des Klebstoffstreifens 40 zu überwachen und erforderlichenfalls in einer Bildauswerteeinheit 45 steuerungs- oder regelungstechnisch zu korrigieren.

Weiter ist mit dem Düsenkopf 18 ein Abstandssensor 46 gekoppelt, mit dem der Abstand der Auftragsdüse 24 zum Werkstück 14 als wichtiger Einstellparameter erfaßt und das Dickenprofil und/oder die Breite des Klebstoffstreifens 40 bestimmt werden kann. Der Abstandssensor 46 führt dabei nach Art eines Scanners eine quer zur Auftragsbahn verlaufende Pendelbewegung aus. Der Abstandssensor 46 ist beispielsweise als Lasersensor oder als Ultraschallsensor ausgebildet.

Die Meßdaten der Kameraeinheiten 42 und des Abstandssensors 46 werden in einen Bilddatenspeicher 47 für die Erfassung der Ist-Daten 40 eingelesen und im Computer 49 zumindest teilweise über eine Vergleicherroutine mit vorgegebenen Sollwert-Daten 40' verglichen. Gemessen werden kann hierbei der Abstand von der Bördelkante 12, 12', die Breite und die Dicke des Klebstoffstreifens 40. Die Vergleichsdaten können dabei umgesetzt werden in Steuerparameter für die Ansteuerung des Dosierers 52 oder der Sprühluftzufuhr 54. Als Steuerparameter kommen in Betracht die Vorschubgeschwindigkeit des Düsenkopfes 18, der Antriebsdruck im Dosierer 52, der Sprühluftdruck bei der Sprühluftzufuhr 54 oder der Abstand der Auftragsdüse 24 vom Werkstück 14. Wegen der hohen Auftragsgeschwindigkeit sind sehr schnelle Kameras 42 nötig. Ebenso wichtig ist eine gute und konstante Ausleuchtung über die Beleuchtungseinheit 44. Zweckmäßig wird jedes einzelne Kamerabild über einen Lichtblitz der als Diodenblitz ausgebildeten Beleuchtungseinheit 44 belichtet. Die Wegmessung entlang der Auftragsbahn 36 erfolgt zweckmäßig über einen Weggeber oder eine Wegskala 57, die durch werkstückfeste Referenzpunkte, wie Referenzbohrungen, Kanten, Abknickungen oder Ausklinkungen justiert und interpoliert werden kann. Mit diesen Maßnahmen kann bei Bedarf auch die vorgegebene Auftragsbahn 36 über die Robotersteuerung den Meßwerten entsprechend korrigiert werden.

Die Überwachung des Klebstoffstreifens mit schnelllaufenden Videokameras 42 erleichtert sowohl die Einstellarbeit der Roboteranordnung 10 und des Dosiersystems 52,54 als auch deren Nachführung bei Störungen, wie Materialwechsel, Temperaturschwankungen oder Eingriff in die ursprünglichen Einstellparameter. Von besonderem Vorteil ist dabei, daß die Einstell- und Nachführungsvorgänge auch über externe Computer 56, beispielsweise von einer Servicestelle aus unter Verwendung eines Online-Netzes 58, wie das Internet durchgeführt werden können.

Zusammenfassend ist folgendes festzuhalten: Die Erfindung bezieht sich auf einen Kleberoboter mit einer Anordnung zum Aufbringen von Klebstoff auf ein Werkstück. Der Kleberoboter weist einen mit dem viskosen Klebstoff unter Druck beaufschlagbaren, eine Auftragsdüse 24 aufweisenden Düsenkopf 18 auf, wobei der Düsenkopf 18 und das Werkstück 14 relativ zueinander bewegbar sind. Der in einem Sprühstrahl 28 aus der Auftragsdüse 24 austretende Klebstoff wird in Form eines Klebstoffstreifens 40 entlang einer vorgegebenen Auftragsbahn 36 auf das Werkstück 14 appliziert. Um die Einstellarbeit und das Nachkalibrieren zu erleichtern, sind mehrere am Düsenkopf 18 angeordnete, mit ihrem Objektiv auf den Sprühstrahl 28 oder den Klebstoffstreifen 40 gerichtete Kameraeinheiten 42 vorgesehen, die ausgangsseitig an eine Bildauswerteeinheit 45 angeschlossen sind. Die über die Kameraeinheiten 42 erfaßten Bilddaten 40 werden zwischengespeichert und mit vorgegebenen Bildwerten 40' verglichen. Aufgrund der entlang der Auftragsbahn 36 ermittelten Abweichungen in den Bildwerten ist eine Kalibrierung und Nachführung der maßgeblichen Steuerparameter des Systems automatisch oder über eine Fernbedienung möglich.

## Patentansprüche

1. Einrichtung zum Aufbringen von Klebstoff auf ein Werkstück mit einem mit dem viskosen Klebstoff unter Druck beaufschlagbaren, eine Auftragsdüse (24) aufweisenden Düsenkopf (18), wobei der Düsenkopf (18) und das Werkstück (14) mittels einer Roboteranordnung (10) so relativ zueinander bewegbar sind, dass der vorzugsweise in einem Sprühlstrahl aus der Auftragsdüse (24) austretende Klebstoff in Form eines Klebstoffstreifens (40) entlang einer vorgegebenen Auftragsbahn (36) auf das Werkstück (14) applizierbar ist, und wobei sich am Düsenkopf (18) oder am zugehörigen Roboterglied eine auf den Sprühstrahl (28) oder den Klebstoffstreifen (40) gerichtete, ausgangsseitig an eine Bildauswerteeinheit (45) zur Erzeugung von Bilddaten des Klebstoffstreifens (40) angeschlossene Kameraanordnung (42) befindet, **dadurch gekennzeichnet, dass** die Kameraanordnung (42) mehrere mit ihrem Objektiv auf den Sprühstrahl (28) oder den Klebstoffstreifen (40) gerichtete Kameraeinheiten umfasst, dass die Bildauswerteeinheit (45) eine Vergleichsschaltung oder -routine für einen Ist-/Sollwert-Vergleich zumindest eines Teils der Bilddaten entlang der Auftragsbahn (36) aufweist, dass der Düsenkopf (18) über eine Dosiereinrichtung (52) mit Klebstoff beaufschlagbar ist und dass die Bildauswerteeinheit (45) Bestandteil eines die Dosiereinrichtung (52,54) ansteuernden Regelkreises ist.

2. Einrichtung nach Anspruch 1, **dadurch gekennzeichnet, dass** die Bildauswerteeinheit (45) einen Istwert-Speicher (47) zur fortlaufenden Abspeicherung der gemessenen Bilddaten des Klebestreifens (40) sowie einen mit dem Istwert-Speicher synchronisierbaren Impulsgeber oder Weggeber (57) entlang der Auftragsbahn (36) aufweist.

3. Einrichtung nach Anspruch 1 oder 2, **dadurch gekennzeichnet, dass** die Kameraeinheiten (42) als Zeilenkameras ausgebildet sind, deren Bildaufnahmezeile quer oder schräg zur Auftragsbahn (36) ausgerichtet sind.

4. Einrichtung nach einem der Ansprüche 1 bis 3, **dadurch gekennzeichnet, dass** die Kameraeinheiten (42) als Videokameras, insbesondere als CCD-Kameras ausgebildet sind.

5. Einrichtung nach einem der Ansprüche 1 bis 3, **dadurch gekennzeichnet, dass** die Kameraeinheiten (42) als Infrarot-Kameras ausgebildet sind.

6. Einrichtung nach einer der Ansprüche 1 bis 5, **gekennzeichnet durch** eine am Düsenkopf (18) oder am zugehörigen Roboterglied (16) angeordnete Beleuchtungseinheit (44).

7. Einrichtung nach einem der Ansprüche 1 bis 6, **gekennzeichnet durch** einen am Düsenkopf (18) oder am zugehörigen Roboterglied (16) angeordneten, auf das Werkstück (14) gerichteten und vorzugsweise über die Auftragsbahn (36) scannenden Abstandssensor (46).

8. Einrichtung nach einem der Ansprüche 1 bis 7, **dadurch gekennzeichnet, dass** die Bildauswerteeinheit (47) einen an vorgegebenen Kalibrierstellen des Werkstücks (14) selbstkalibrierenden Impuls- oder Weggeber aufweist.

9. Einrichtung nach einem der Ansprüche 1 bis 8, **dadurch gekennzeichnet, dass** die Bildauswerteeinheit einen Sollwert-Speicher oder - Generator zur Generierung von vorgegebenen Bilddaten (40') entlang der Auftragsbahn (36) aufweist.

10. Einrichtung nach Anspruch 9, **dadurch gekennzeichnet, dass** die Sollwert-Bilddaten (40') in einem Lerndurchlauf generierbar sind.

11. Einrichtung nach einem der Ansprüche 1 bis 10, **dadurch gekennzeichnet, dass** die Dosiereinrichtung (52) einen Mengenregler zur Einstellung des Klebstoffflusses sowie eine Regel- oder Steuereinrichtung (54) zur Einstellung der Streifenbreite des Klebstoffs entlang der Auftragsbahn (36) aufweist.

12. Einrichtung nach einem der Ansprüche 1 bis 11, **dadurch gekennzeichnet, dass** die Roboteranordnung (10) einen Bahnkurvenspeicher oder -generator zur Einstellung des Wegs und der Geschwindigkeit des Dosierkopfs (18) entlang der vorgegebenen Auftragsbahn (36) aufweist.

13. Einrichtung nach Anspruch 11 oder 12, **dadurch gekennzeichnet, dass** der Mengenregler eine Kolbenpumpe mit einem Kolbenhubmesser umfasst, deren Antriebsdruck oder -kraft bei zumindest zeitweilig konstantem Auftragsdüsenquerschnitt variabel ist.

14. Einrichtung nach einem der Ansprüche 1 bis 13, **dadurch gekennzeichnet, dass** der Düsenkopf (18) über einen Druckregler (52) mit Klebstoff beaufschlagbar ist und dass die Bildauswerteeinheit (45) Bestandteil eines den Druckregler (52,54) ansteuernden Regelkreises sind.

15. Einrichtung nach einem der Ansprüche 1 bis 14, **dadurch gekennzeichnet, dass** der Düsenkopf (18) als Wirbelsprühkopf ausgebildet ist, dessen Auftragsdüse zur Abgabe eines zusammenhängenden Klebstofffadens (28) bestimmt ist, und der mindestens einen schräg zur Auftragsdüse (24) weisenden Sprühluftkanal (34) aufweist, und dass eine Steuerungseinrichtung (54) zur Einstellung der Sprühluftzufuhr nach Maßgabe der vorgegebenen Streifenbreite entlang der Auftragsbahn (36) vorgesehen ist, die mit einem von der Bildauswerteeinheit (45) abgegebenen, aus einer Abweichung der gemessenen von der vorgegebenen Streifenbreite abgeleiteten Nachführsignal beaufschlagbar ist.

16. Einrichtung nach einem der Ansprüche 1 bis 15, **dadurch gekennzeichnet, dass** der Düsenkopf (18) als Wirbelsprühkopf ausgebildet ist, dessen Auftragsdüse (24) zur Abgabe eines zusammenhängenden Klebstofffadens (28) besteht und um eine Exzenterachse drehend antreibbar ist, und dass eine Steuerungseinrichtung zur Einstellung der Düsendrehzahl nach Maßgabe der vorgegebenen Streifenbreite entlang der Auftragsbahn (36) vorgesehen ist, die mit einem von der Bildauswerteeinheit (45) abgegebenen, aus einer Abweichung der gemessenen von der vorgegebenen Streifenbreite abgeleiteten Nachführsignal beaufschlagbar ist.

17. Einrichtung nach Anspruch 15 oder 16, **dadurch gekennzeichnet, dass** die Steuerungseinrichtung (54) zur Einstellung der Sprühluftzufuhr oder der Düsendrehzahl eingangsseitig mit Steuerparametern beaufschlagt ist, die aus der vorgegebenen oder gemessenen Klebstoffmenge pro Zeiteinheit und/oder einer viskositätsabhängigen Größe abgeleitet sind.

18. Einrichtung nach Anspruch 17, **dadurch gekennzeichnet, dass** die viskositätsabhängige Größe proportional zum momentanen Antriebsdruck einer als Kolbenpumpe ausgebildeten Dosiervorrichtung (54) ist.

19. Einrichtung nach einem der Ansprüche 1 bis 18, **dadurch gekennzeichnet, dass** die Bildauswerteeinheit (45) durch einen Steuercomputer (49) und eine Bildauswertesoftware gebildet ist.

20. Einrichtung nach Anspruch 19, **dadurch gekennzeichnet, dass** die Bildauswerteeinheit oder der Steuercomputer (49) vorzugsweise über ein Online-Netz (58) mit einem externen Computer (56) vernetzt ist.

21. Einrichtung nach Anspruch 20, **dadurch gekennzeichnet, dass** der externe Computer (56) vorzugsweise über das Online-Netz mit der Steuereinrichtung (52,54) vernetzt ist.

## Claims

1. Device for applying adhesive to a workpiece, comprising a nozzle head (18), which has an application nozzle (24) and can be supplied with a pressurised viscous adhesive, wherein the nozzle head (18) and workpiece (14) are movable relative to each other by means of a robotic arrangement (10) so that the adhesive, which is preferably issued from the application nozzle (24) in a spray jet, is applied to a workpiece (14) along a predefined application line (36) in the form of an adhesive strip (40), and wherein there is a camera arrangement (42) on the nozzle head (18) or associated robot element, aligned onto the spray jet (28) or adhesive strip (40), and connected on the output side to an image evaluation unit (45) to generate image data of the adhesive strip (40), **characterized in that** the camera arrangement (42) includes multiple camera units with their objective aligned onto the spray jet (28) or adhesive strip (40), that the image evaluation unit (45) has a comparison circuit or routine for an actual/setpoint value comparison of at least part of the image data along the application line (36), that adhesive can be applied to the nozzle head (18) via a dispenser (52), and that the image evaluation unit (45) is part of a control loop which controls the dispenser (52, 54).

2. Device according to Claim 1, **characterized in that** the image evaluation unit (45) includes an actual-value memory (47) for continuous recording of the measured image data of the adhesive strip (40) and a pulse or position encoder (57) which can be synchronised with the actual-value memory along the application line (36).

3. Device according to Claim 1 or 2, **characterized in that** the camera units (42) are in the form of line cameras, the image recording line of which is aligned across or diagonally to the application line (36).

4. Device according to one of Claims 1 to 3, **characterized in that** the camera units (42) are in the form of video cameras, particularly CCD cameras.

5. Device according to one of Claims 1 to 3, **characterized in that** the camera units (42) are in the form of infra-red cameras.

6. Device according to one of Claims 1 to 5, **characterized by** an illumination unit (44) which is arranged on the nozzle head (18) or on the associated robot element (16).

7. Device according to one of Claims 1 to 6, **characterized by** a distance sensor (46) which is arranged on the nozzle head (18) or on the associated robot element (16), is aligned onto the workpiece (14), and preferably scans via the application line (36).

8. Device according to one of Claims 1 to 7, **characterized in that** the image evaluation unit (47) has a pulse or position encoder which is self-calibrating on specified calibration points of the workpiece (14).

9. Device according to one of Claims 1 to 8, **characterized in that** the image evaluation unit has a setpoint value memory or generator to generate specified image data (40') along the application path (36).

10. Device according to Claim 9, **characterized in that** the setpoint value image data (40') can be generated in a learning run.

11. Device according to one of Claims 1 to 10, **characterized in that** the dispenser (52) has an amount regulator to set the adhesive flow, and a regulating or control unit (54) to set the strip width of the adhesive along the application line (36).

12. Device according to one of Claims 1 to 11, **characterized in that** the robotic arrangement (10) includes a line curve memory or generator to specify the path and speed of the nozzle head (18) along the specified application line (36).

13. Device according to Claim 11 or 12, **characterized in that** the amount regulator includes a reciprocating pump with a piston travel meter, of which the drive pressure or drive force is variable with at least temporarily constant application nozzle cross-section.

14. Device according to one of Claims 1 to 13, **characterized in that** adhesive can be applied to the nozzle head (18) via a pressure regulator (52), and that the image evaluation unit (45) is part of a control loop which controls the pressure regulator (52, 54).

15. Device according to one of Claims 1 to 14, **characterized in that** the nozzle head (18) is a cyclonic spray head, of which the application nozzle is designed for emission of a coherent adhesive thread (28), and which includes at least one air spray channel (34) which is aligned diagonally to the application nozzle (24), and that a control unit (54) is provided for adjusting the supply of spray air depending on the specified strip breadth along the application line (36), to which a correction signal which is output by the image evaluation unit (45) and is derived from a deviation of the measured strip width from the specified strip width can be applied.

16. Device according to one of Claims 1 to 15, **characterized in that** the nozzle head (18) is a cyclonic spray head, of which the application nozzle (24) is designed for emission of a coherent adhesive thread (28) and can be driven for rotation about an eccentric axis, and that a control unit is provided for adjusting the nozzle rotational speed depending on the specified strip breadth along the application line (36), to which a correction signal which is output by the image evaluation unit (45) and is derived from a deviation of the measured strip width from the specified strip width can be applied.

17. Device according to Claim 15 or 16, **characterized in that** control parameters can be applied to the control unit (54) on the input side, to adjust the spray air supply or the nozzle rotational speed, and can be derived from the predetermined or measured amount of adhesive per time unit and a viscosity-dependent magnitude.

18. Device according to Claim 17, **characterized in that** the viscosity-dependent magnitude is proportional to the instantaneous drive pressure of a dispensing device (54) in the form of a reciprocating pump.

19. Device according to one of Claims 1 to 18, **characterized in that** the image evaluation unit (45) consists of a control computer (49) and image evaluation software.

20. Device according to Claim 19, **characterized in that** the image evaluation unit (45) or control computer (49) is preferably networked via an online network (58) with an external computer (56).

21. Device according to Claim 20, **characterized in that** the external computer (56) is preferably networked with the controller (52, 54) via the online network.

## Revendications

1. Dispositif pour appliquer de la colle sur une pièce à l'aide d'une tête de buse (18) pouvant être alimentée sous pression en colle visqueuse et présentant une buse d'application (24), dans lequel la tête de buse (18) et la pièce (14) sont déplaçables l'une par rapport à l'autre au moyen d'un dispositif robotique (10) de telle manière que la colle sortant de la buse d'application (24) de préférence en un jet de pulvérisation puisse être appliquée sous la forme d'un cordon de colle (40) le long d'un parcours d'application défini (36) sur la pièce (14), et dans lequel la tête de buse (18) ou l'élément robotique correspondant porte un dispositif à caméras (42) dirigé vers le jet de pulvérisation (28) ou le cordon de colle (40), connecté côté sortie à une unité d'analyse d'images (45) pour générer des données d'images du cordon de colle (40), **caractérisé par le fait que** le dispositif à caméras (42) comprend plusieurs unités de caméra dirigées par leur objectif vers le jet de pulvérisation (28) ou le cordon de colle (40), que l'unité d'analyse d'images (45) présente un circuit ou une routine de comparaison pour une comparaison réel/nominal d'au moins une partie des données d'images le long du parcours d'application (36), que la tête de buse (18) peut être alimentée en colle par un dispositif de dosage (52) et que l'unité d'analyse d'images (45) fait partie intégrante d'une boucle de régulation pilotant le dispositif de dosage (52, 54).

2. Dispositif selon la revendication 1, **caractérisé par le fait que** le dispositif d'analyse d'images (45) présente une mémoire de valeurs réelles (47) pour la mémorisation continue des données d'images mesurées du cordon de colle (40) ainsi qu'un transmetteur d'impulsions ou de position (57) synchronisable avec la mémoire de valeurs réelles le long du parcours d'application.

3. Dispositif selon la revendication 1 ou 2, **caractérisé par le fait que** les unités de caméra (42) sont formées de caméras linéaires dont la ligne de prise de vue est orientée perpendiculairement ou obliquement par rapport au parcours d'application (36).

4. Dispositif selon l'une des revendications 1 à 3, **caractérisé par le fait que** les unités de caméra (42) sont formées de caméras vidéo, en particulier de caméras CCD.

5. Dispositif selon l'une des revendications 1 à 3, **caractérisé par le fait que** les unités de caméra (42) sont formées de caméras infrarouges.

6. Dispositif selon l'une des revendications 1 à 5, **caractérisé par** une unité d'éclairage (44) disposée sur la tête de buse (18) ou sur l'élément de robot correspondant.

7. Dispositif selon l'une des revendications 1 à 6, **caractérisé par** un capteur de distance (46) disposé sur la tête de buse (18) ou sur l'élément de robot correspondant, dirigé vers la pièce (14) et analysant de préférence la pièce sur le parcours d'application (36).

8. Dispositif selon l'une des revendications 1 à 7, **caractérisé par le fait que** l'unité d'analyse d'images (47) présente un transmetteur d'impulsions ou de position auto-étalonnant à des points d'étalonnage définis de la pièce (14).

9. Dispositif selon l'une des revendications 1 à 8, **caractérisé par le fait que** l'unité d'analyse d'images présente une mémoire ou un générateur de valeurs nominales pour la génération de données d'images définies (40') le long du parcours d'application (36).

10. Dispositif selon la revendication 9, **caractérisé par le fait que** les données d'images nominales (40') peuvent être générées lors d'un cycle d'apprentissage.

11. Dispositif selon l'une des revendications 1 à 10, **caractérisé par le fait que** le dispositif de dosage (52) présente un régulateur de débit pour régler le flux de colle ainsi qu'un dispositif de régulation ou de commande (54) pour régler la largeur du cordon de colle le long du parcours d'application (36).

12. Dispositif selon l'une des revendications 1 à 11, **caractérisé par le fait que** le dispositif robotique (10) présente une mémoire ou un générateur de trajectoire pour le réglage de la course et de la vitesse de la tête de buse (18) le long du parcours d'application (36).

13. Dispositif selon la revendication 11 ou 12, **caractérisé par le fait que** le régulateur de débit comprend une pompe à piston avec un capteur de course de piston, dont la pression d'entraînement ou la force d'entraînement est variable pour une section de buse d'application au moins temporairement constante.

14. Dispositif selon l'une des revendications 1 à 13, **caractérisé par le fait que** la tête de buse (18) peut être alimentée en colle par l'intermédiaire d'un régulateur de pression (52) et que l'unité d'analyse d'images (45) fait partie intégrante d'une boucle de régulation pilotant le régulateur de pression (52, 54).

15. Dispositif selon l'une des revendications 1 à 14, **caractérisé par le fait que** la tête de buse (18) est réalisée sous forme de tête de pulvérisation tourbillonnante dont la buse d'application est destinée à la livraison d'un filet de colle continu (28) et qui présente au moins un canal d'air de pulvérisation (34) orienté obliquement par rapport à la buse d'application (24), et qu'il est prévu un dispositif de commande (54) pour le réglage de l'amenée d'air de pulvérisation en fonction de la largeur de cordon définie le long du parcours d'application (36), auquel peut être amené un signal d'asservissement délivré par le dispositif d'analyse d'images (45), déduit d'une différence entre la largeur de cordon définie et celle mesurée.

16. Dispositif selon l'une des revendications 1 à 15, **caractérisé par le fait que** la tête de buse (18) est réalisée sous forme de tête de pulvérisation tourbillonnante dont la buse d'application (24) est destinée à la livraison d'un filet de colle continu (28) et qui peut être entraînée en rotation autour d'un axe excentrique, et qu'il est prévu un dispositif de commande pour le réglage de la vitesse de rotation de la buse en fonction de la largeur de cordon définie le long du parcours d'application (36), auquel peut être amené un signal d'asservissement délivré par le dispositif d'analyse d'images (45), déduit d'une différence entre la largeur de cordon définie et celle mesurée.

17. Dispositif selon la revendication 15 ou 16, **caractérisé par le fait que** le dispositif de commande (54) pour le réglage de l'amenée d'air de pulvérisation ou de la vitesse de rotation de la buse peut être soumis côté entrée à des paramètres de commande qui sont déduits de la quantité de colle par unité de temps définie ou mesurée et/ou d'une grandeur dépendante de la viscosité.

18. Dispositif selon la revendication 17, **caractérisé par le fait que** la grandeur dépendante de la viscosité est proportionnelle à la pression d'entraînement instantanée d'un dispositif de dosage (54) réalisé sous la forme d'une pompe à piston.

19. Dispositif selon l'une des revendications 1 à 18, **caractérisé par le fait que** l'unité d'analyse d'images (45) est formée par un ordinateur de commande (49) et un logiciel d'analyse d'images.

20. Dispositif selon la revendication 19, **caractérisé par le fait que** l'unité. d'analyse d'images ou l'ordinateur de commande (49) est de préférence relié(e) à un ordinateur externe (56) par un réseau en ligne (58).

21. Dispositif selon la revendication 20, **caractérisé par le fait que** l'ordinateur externe (56) est de préférence relié au dispositif de commande (52, 54) par le réseau en ligne.
